# EUROPEAN PATENT SPECIFICATION

(11) **EP 1 457 164 B1**
(45) Date of publication and mention of the grant of the patent: **14.05.2008**
(21) Application number: 04005372.0
(22) Date of filing: 06.03.2004
(51) Int. Cl.: A61C 8/00

(54) **Structure for fixing an abutment to an implant, especially for dental applications**
Struktur zum Befestigen eines Abutments auf einem Implantat, insbesondere für zahnärztliche Anwendungen
Système de fixation d'un attachement sur un implant, en particulier pour des applications dentaires

(30) Priority: 13.03.2003 IT ps20030006
(43) Date of publication of application: 15.09.2004
(73) Proprietor: Corigliano, Massimo, 00015 Monterotondo (Roma) (IT)
(72) Inventor: Corigliano, Massimo, 00015 Monterotondo (Roma) (IT)
(74) Representative: Gustorf, Gerhard

(56) References cited:
- WO-A-00/38588
- WO-A-97/01306
- DE-A- 19 647 490
- US-A- 5 947 733
- US-A1- 2001 053 512

## Description

### Scope of the technique

The use of osteo-integrated dental implants sunk into the osseous tissue is well known. This is achieved by making an appropriate seating in which the post-pin supporting the coronal portion of the dental prosthesis is lodged.

In this context implants described as osteo-connected aim to achieve optimised osseous integration in terms of reduced traumatism in view of the special features of the surgical methods adopted, the characteristics of the instruments used during the operation, as well as the shape and arrangements of the implanted structures.

Among the numerous delicate aspects and requirements that these technologies naturally present, a matter of not-secondary importance is the interface between the osteo-connected or osteo-integrated insert and the prosthesis support post, because the chewing forces applied to this are discharged through that interface on to the insert, so that uniformity and related firmness affect the success and durability of the implant.

Fitting systems based on the known technique are not ideal for meeting these requirements in terms of absence of contra-indications. In fact these provide solutions that involve only screwing or a combination of screwing systems with simple prismatic anti-rotational devices.

However, solutions of the former type tend to become unscrewed and do not ensure maintenance of the optimal position.

Those of the second type, which have prismatic anti-rotational devices that are short and not very broad or deep, nevertheless need locking screws to hold the components together in the dynamic stage, and in any case even these arrangements tend to come unscrewed under stress, leading even to breakage of components in a few cases.

An implant structure as set forth in the preamble of the claim is known from WO 00/38588. The lower portion of the post of the implant is subdivided in three sectors to be coupled to the coping, i.e. a lower end portion which is conical, an upper portion which is also conical and an intermediate portion of octagonal section.

US 2001/0053512 A1 discloses an implant structure the base of which, coupled to the coping of the abutment, is also provided with three consecutive end portion, the intermediate portion having a cylindrical shape.

### Aims of the invention

In that context, the main aim of this invention is to provide for an innovative configuration of the fitting of osseous and/or dental prosthesis support posts into the osteo-connected or osteo-integrated osseous and / or dental inserts so as to maximise the solidity of the bond.

Another aim of this invention is to achieve the previous aim by means of a solution concept that is suited not only to dental applications but to practically any kind of fitting of intraosseus prostheses into osteo-connected or osteo-integrated osseous inserts, wherever they may occur.

Yet another goal of this invention is to achieve the previous aims by means of a solution concept that has a monolithic structure, i.e. in a single piece, and which can be easily removed if necessary.

A further aim of this invention is to achieve the above aims while nevertheless attaining a simple and effective structure, safe in operation and of relatively low cost in relation to the results achieved in practice with it.

### Solution concept summary extract

These and yet other aims are all achieved with the structure as claimed in claim 1 for implanting support posts for intraosseus prostheses into osteo-connected osseous inserts, specially for dental applications, based on this invention, having a conical proximal portion (7A) interacting with a complementary hollow (7B) and an octagonal cross-section consecutive co-axial distal portion (8A) with a broad axial extension inserted in a correspondingly shaped seat (8B).

### Identification of the attached drawings

Further characteristics and advantages of the object to which this invention relates will become clearer from the detailed description that follows of one form of realisation of it, preferred but not exclusive, put forward solely for exemplary purposes and without limitation, in the two attached tables of drawings, in which:
Figure 1 shows a partially cut away lateral view and with details shown in outline of a support post for prostheses, for example a dental one, including the implant structure based on this invention;
Figure 2 shows a longitudinal cross-section of an osteo-connected insert, for example a dental one, suitable for receiving the support post for prostheses, for example of the dental type, including the implant structure based on this invention.

### Static description of the example of production

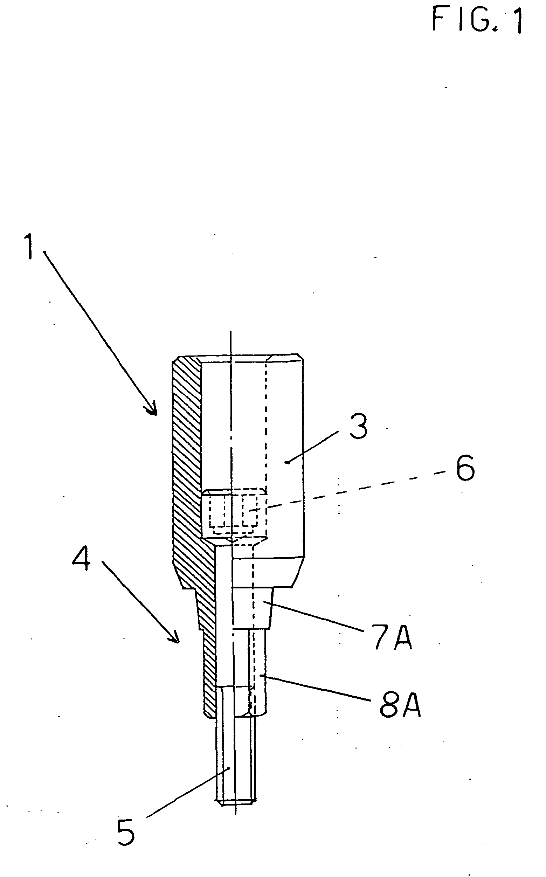

With reference to these figures, and in particular to figure 1, no. 1 denotes a whole support post for prostheses, for example of the dental kind, including a head 3, suitable for supporting in the known way the coronal portion of a dental prosthesis that is not illustrated, and a pin, denoted as a whole by no. 4;
as in the known technique, a screw 5 passes axially through the pin 4. The screw head 6 is sunk into the head 3 of the post 1;
with this invention, however, the pin 4 is shaped with a conical proximal portion 7A and an octagonal cross-section consecutive distal portion 8A with a broad axial extension.

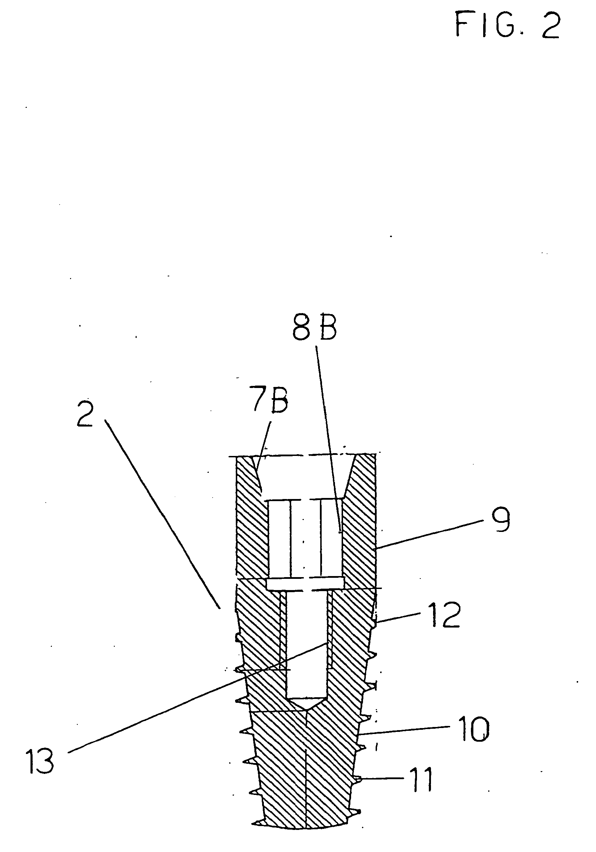

In figure 2 on the other hand, no. 2 denotes the whole of an osteo-connected dental inset, for example and preferably of the type illustrated and claimed in European patent no. 895,757 under the name of the same Dr. Massimo Corigliano, the current applicant, claiming the priority of Italian patent application no. MI 97 A 001906 deposited on 07 August 1997.

The insert 2 includes a neck 9 and a conical core 10, on whose external surface there is a conical screw-thread 11 which continues in a cylindrical thread 12 on the external surface of the aforesaid neck 9;
above the neck 9 there is a conical hollow 7B, whose shape and size are complementary to the conical proximal portion 7A of the post 1, tapering into a co-axial compartment 8B of octagonal cross-section whose shape and size are complementary to the octagonal cross-section distal portion 8A of the post 1, leading into a seat base 13 of screw 5, for the functions described below.

### Dynamic description of the example of production

Having thus completed the static description of a preferred example of production of the implant structure based on this invention, we will next move on to the dynamic one, that is to say its method of working:
the osteo-connected dental insert 2 is fitted in place in the known way and, if of the type illustrated and claimed in European patent no. 895,757 under the name of the same Dr. Massimo Corigliano, the current applicant, claiming the priority of Italian patent application no. MI 97 A 001906 deposited on 07 August 1997, with the special features of functionality and reduced trauma referred to therein;
after osteo-connection has occurred, when the implant is ready to be placed under load, the post 1 can be put into the insert 2, the post being supplied if necessary with the coronal portion of a dental prosthesis, as in the known technique, and retained there by screwing the screw 5 into the seat base 13 of the insert 2;
in this operational position the conical proximal portion 7A of the post 1 interacts with the complementary hollow 7B of the insert 2 and the octagonal cross-section consecutive distal portion 8A interacts with the corresponding shaped seat 8B, in such a way that the first synergy is immovability because of the optimal centring, housing, matching and distribution to the axial forces, while the second synergy retains the components of torsional force, with special effectiveness in view of the broad axial extension, preventing any unscrewing or breakage.

### Implementation alternatives

It is obvious that in other alternative forms of implementation, while still falling within the innovation concept implicit in the example of production explained above and claimed below, the implant based on this invention could be made using technical and structural equivalents, or accompanied by further supplementary devices, just as all the shapes of the related constituents can be changed in ways suitable to the purpose;
in particular this could be applied, as well as to the dental sector described above as an example, to any orthopaedic application where it is necessary or opportune to associate support posts for intraosseus prostheses with osteo-connected or osteo-integrated osseous inserts.

### Advantages of the invention

As seems clear from the detailed description above of a preferred implementation example, the implant structure based on this invention offers advantages corresponding to achievement of the preset aims and yet others. It in fact supplements a simple and effective means of reciprocally anchoring in a stable and lasting manner without substantial contra-indications of any kind, support posts for intraosseus prostheses to osteo-connected or osteo-integrated osseous inserts, expecially in dental applications.

## Claims

1. Implant structure comprising an osteo-connectable insert (2), a support post (1) for prostheses and means (5) for securing said support post (1) to said insert (2), said support post (1) and said insert (2) being provided with complementary matched conical centering surfaces and octagonal anti-rotation surfaces, **characterized in that** said support post (1) is made up of a head (3) adapted to support a dental prosthesis and of a pin (4) having a two-part subdivision, made up of only one distal end portion (8A) of octagonal cross-section inserted in a correspondingly shaped seat (8B) of said insert (2) and of a consecutive proximal conical portion (7A) interacting with a complementary conical hollow (78) of the insert (2), wherein the axial extension of the distal end portion (8A), having an octagonal cross section, exceeds that of the proximal conical portion (7A).

## Patentansprüche

1. Implantatstruktur, umfassend ein in einen Knochen einsetzbares Implantat (2), ein Abutment (1) für den Prothesenaufbau und Mittel (5) zur Befestigung des Abutments (1) an dem Implantat (2), wobei das Abutment (1) und das Implantat (2) mit aneinander angepassten, konischen Zentrierflächen und oktagonalen Verdrehsicherungsflächen versehen sind, **dadurch gekennzeichnet, dass** das Abutment (1) aus einem Kopf (3) für die Aufnahme einer Dentalprothese und aus einem Stift (4) zusammengesetzt ist, der in zwei Abschnitte unterteilt ist, bestehend aus einem einzigen distalen Endabschnitt (8A) mit oktagonalem Querschnitt, der in einen entsprechend geformten Sitz (8B) des Implantats (2) eingesetzt ist, und aus einem anschließenden proximalen Abschnitt (7A), der mit einem komplementären konischen Hohlraum (7B) des Implantats (2) zusammenwirkt, wobei die axiale Erstreckung des distalen Endabschnitts (8A) mit oktagonalem Querschnitt länger als diejenige des proximalen, konischen Abschnitts (7A) ist.

## Revendications

1. Structure d'implantation comprenant un implant (2) apte à être inséré dans l'os, un embout (1) pour maintenir la prothèse et des moyens (5) pour fixer ledit embout sur l'implant, l'embout (1) et l'implant (2) étant pourvus de surfaces coniques de centrage complémentaires et de surfaces octogonales anti-rotation, **caractérisée par le fait que** l'embout (1) se compose d'une tête (3) pour recevoir la prothèse et d'une tige (4) divisée en deux parties, à savoir une seule partie d'extrémité distale (8A) de section octogonale insérée dans un logement (8B) de forme correspondante à l'implant (2), et une partie attenante proximale (7A) s'insérant dans un logement conique complémentaire (7B) de l'implant (2), l'extension axiale de la partie d'extrémité distale (8A) à section octogonale étant plus longue que celle de la partie proximale conique (7A).
